# EUROPEAN PATENT SPECIFICATION

(11) **EP 0 721 738 B1**
(45) Date of publication and mention of the grant of the patent: **21.11.2001**
(21) Application number: 96200021.2
(22) Date of filing: 05.01.1996
(51) Int. Cl.: A22C 11/00

(54) **Method and apparatus for peeling sausages**
Verfahren und Vorrichtung zum Schälen von Würsten
Procédé et machine pour enlever l'enveloppe de saucisses

(30) Priority: 10.01.1995 IT MO950007
(43) Date of publication of application: 17.07.1996
(73) Proprietor: VE.MA.C. S.R.L., 41051 Castelnuovo Rangone (Modena) (IT)
(72) Inventor: Costantini, Maurizio, I-41057 Spilamberto, Modena (IT); Malagoli, Uliano, I-41043 Formigine, Modena (IT); Vezzali, Franco, I-41057 Spilamberto, Modena (IT)
(74) Representative: Luppi, Luigi

(56) References cited:
- EP-A- 0 059 940
- EP-A- 0 303 966
- EP-A- 0 509 477
- DE-B- 1 291 250
- US-A- 2 340 755
- US-A- 2 630 598
- US-A- 2 725 591
- US-A- 2 779 968
- US-A- 4 682 387
- US-A- 5 246 395

## Description

The invention concerns a method and a machine for peeling sausages, salami in particular, that is a new procedure for removing the external layer from food products that have been put into skins, generally made of natural or synthetic gut, forming the containing and protective covering for minced, spiced and maybe cooked and seasoned meat products. Prior art comprises manual skinning of salami in factories for the industrial production of preserved meat products, which is effected after cutting the containing skin of the meat products at one of the ends of the product whereupon it is peeled by hand in preparation for subsequent processing, such as slicing and packaging in containers; all this with inevitable time wasting, also associated with the frequent tearing of the skin, arising from anomalous tensile stresses in the skin, that entail a considerable reduction in productivity due to the need to continue the operation by effecting another incision in the skin; consequent considerable use of labour and high costs.

US 4682387 discolses apparatus and method for stripping the casing from casing enclosed sausage sticks comprising an indexing device which moves sausages in a path during which the front end of the sausage stick is severed. The sausage sticks are then moved horizontally by a positioning conveyor and the front edges of the casing are engaged by a casing stripper device. The casing is pulled from the sausage stick as the latter is moved by a positioning conveyor. An ejector mechanism ejects the sausage from the gripper device.

In US 4682387 when severing of the front edge of the sausage stick takes place, a drawback occurs consisting in loss of a certain amount of sausage product which is also severed toghether with the casing.

Such prior art may be subject to considerable improvements with a view to eliminating the drawback indicated above.

The invention overcomes said drawback by adopting the features of claims 1 and 4.

It is advantageously envisaged that the divarication of the covering be such ad to deform the edge in a permanent manner so as to make it take on a configuration, substantially cylindrical, having a transverse dimension greater than the diameter of the item.

This enables the item to be peeled without undesirable lacerations, or tearing of the its external skin, due to the manner in which the skin is removed that enables it to be subjected to a uniform and continuous load, consequently enable a high productivity to be achieved.

In a particularly advantageous version, the divarication of the perimeter of the covering is carried in two successive phases, of which a first phase to give the open end of the skin an increased dimension with respect to the initial one, but still smaller than that of the item, a second phase to enlarge said end to a dimension which is greater than that of said item.

This, in particular, makes it possible to avoid the risk of lacerations, or tears, even when particularly fragile skins are used, or which have not been optimally humidified.

In a particularly advantageous version, before cropping, the covering is separated from the meat products at the end of the item to be cropped, this being achieved with the insufflation of a separating fluid, for example, compressed air, between said covering and said meat products.

This enables the first separating phase of the skin to be made easier, which would otherwise prove to be extremely difficult, particularly as, in seasoned preserved meat products, it tends to adhere very firmly to the meat products it covers.

Insufflating of the separating fluid can be carried out in a particularly functional manner, having created a cavity between the meat products and the skin into which said fluid may be injected.

The cropping device, for cutting the end of the skin from the body of the item after it has been separated from the meat products, is advantageously situated on a first longitudinal sliding carriage that moves in a direction which is parallel to the longitudinal axis of the item.

Said first longitudinal sliding carriage also being advantageously equipped with a tensioning device consisting of gripping pincers with oscillating jaws that grip the end of the covering, generally being in the form of an indented cone diverging outwards, while the body of the item is held by a holding device co-operating with said pincers.

The machine is also advantageously equipped with a second longitudinal sliding carriage, parallel with said first longitudinal carriage, equipped with a perforating device with needle, integral with a transverse sliding carriage that moves in a direction which is substantially perpendicular to the axis of the product, to inject separating fluid in the cavity defined between the meat product and the skin, once said tensioning device has intervened.

The transverse sliding carriage is also equipped with a forked distancing device, that prevents the fastener closing the covering at the end that is to be cropped from lying in the trajectory of the blade the cropping device is equipped with.

Said device for divaricating the edge of the skin covering the item, after the end of said skin has been cut, is advantageously made co-operating with means for transferring and positioning of the capped item, can comprise two pairs of divaricating elements, offset 90° with respect to each other, oscillating between a closed position, suitable for insertion in the opening of the cropped end of the skin facing it and an open position, corresponding to a radial deformation of said end.

Said peeling device advantageously comprises a duplicate pair of divaricating elements, offset 90° with respect to each other, oscillating between a closed position, suitable for insertion in the opening of the cropped end of the skin facing it and an open position, suitable for gripping the skin and against the internal surface of a reference ring in a position corresponding to the maximum radial deformation envisaged for said end.

This enables the items to be rid of the external containing and protective skin of the meat products in an optimal, entirely automatic manner and a high productivity to be attained.

An embodiment of the invention is illustrated, purely by way of example, in the seventeen tables of drawings attached, in which:

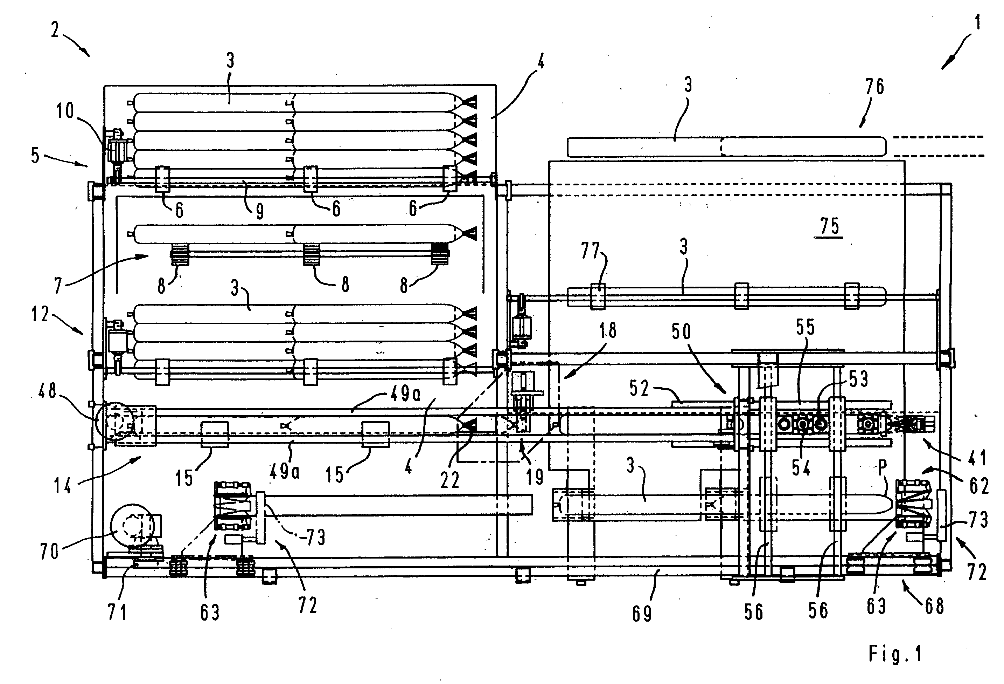

Figure 1 is a plan view of a peeling machine;

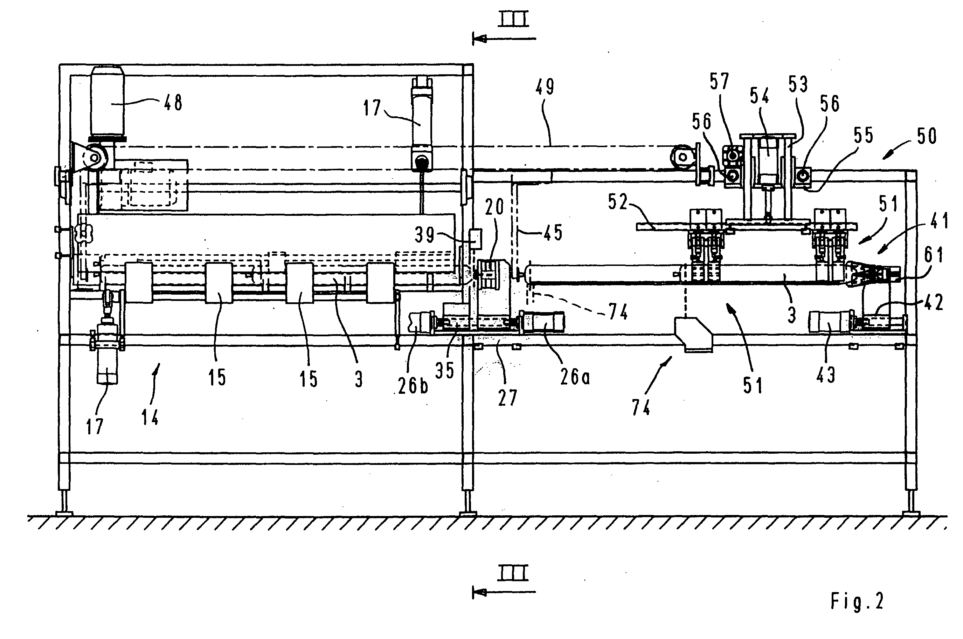

Figure 2 is a side elevation of Figure 1;
Figure 3 is transverse section III-III of Figure 2;
Figure 4 is an enlarged and interrupted view of the device to prepare one of the ends of the item for peeling;
Figure 5 is diverted section V-V of Figure 4;
Figure 6 is schematic section VI-VI, enlarged and interrupted, of Figure 4;
Figure 7 is a side view, partially sectioned and greatly enlarged, of the divaricating device of the skin of the item at the end prepared for peeling;
Figure 8 is a partial, enlarged view of the gripping pincers of the peeling device, at the beginning of the playing operation of the skin;
Figure 9 is a view as in Figure 8, but during the peeling;
Figure 10 is a view from the right of Figure 2 showing the outlet section of the peeled items;
Figure 11 is a view from the right of Figure 10, of just the device for lifting the peeled items and pushing them towards a store supplying the slicing machines;
Figure 12 is section XII-XII, enlarged and interrupted, of Figure 11;
Figure 13 is the enlarged detail of the device for the preliminary separation of the skin from the meat products;
Figure 14 is a view as in Figure 7, partially sectioned, but of a variant of a vacuum-operated pneumatic divaricator;
Figures 15, 16 are longitudinal sections of the pneumatic divaricator device with the end of the item inserted, respectively in an insertion and an outlet phase;
Figure 17 is a view from the left of Figure 14;
Figure 18 is a view from the top of Figure 17;
Figure 19 is a view from above a pincer of the peeling device, but in a variant operated by means of a sliding sleeve and fork;
Figure 20 is a view from the left of Figure 19;
Figure 21 is section XXI-XXI of Figure 20, with the pincer in an inserted position;
Figure 22 is a section as in Figure 20, but with the pincer in a closed position;

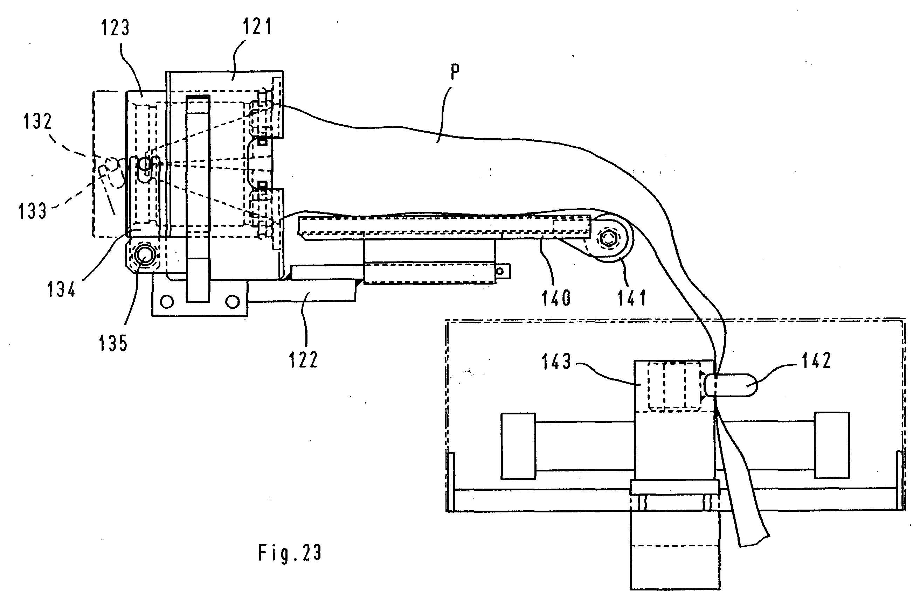

Figure 23 is a side view of a device for separating the covering from the peeling pincer;
Figure 24 is a view from the right of Figure 23;
Figure 25 is a view from above Figure 24;

A machine 1 comprises a feeder station 2 for the items 3, particularly salamis, to be peeled, which are generally in the form of a substantially regular cylinder, provided with a slide 4, inclined towards the central part of the machine, having a first feeder device 5 with rocker arm 6 to introduce the items 3 into the humidifier 7 one at a time, which is provided with a plurality of rollers 8 acting on the external surface of an item 3 resting on the slide 4 to cause it, by means of friction, to rotate on its longitudinal axis.

Each feeder device 5 has three rocker arms 6, aligned and equidistant along the axis of the items 3, the rocker arms being made to oscillate on a pin 9 substantially parallel to the axis of the items 3 by means of respective driving means advantageously consisting of a double-acting pneumatic cylinder 10.

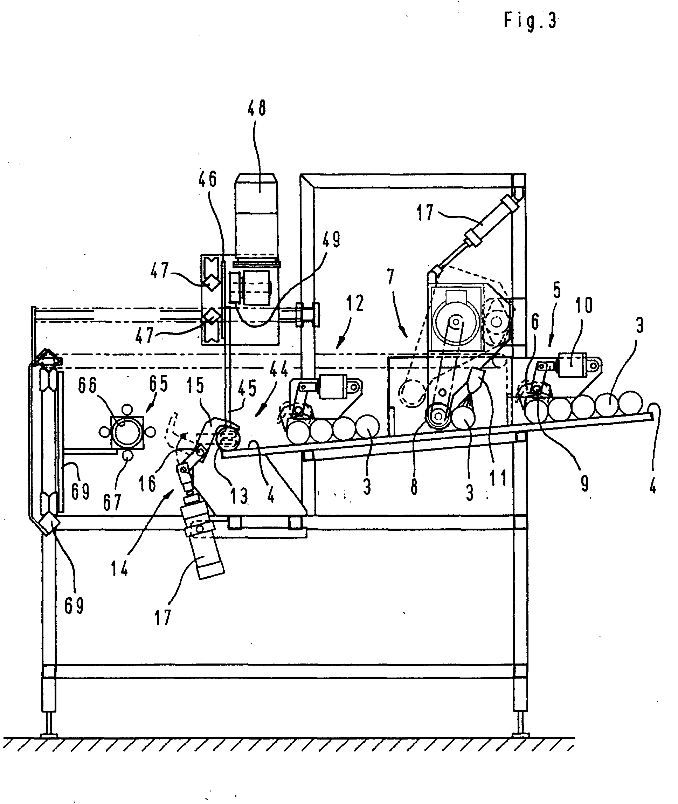

The humidifying station 7 has a plurality spray nozzles 11(Figure 3) to spray the item 3 with nebulized water in order to soften the external skin P, or film, or covering, that has become leathery and, sometimes, fragile due to the preceding seasoning procedure, entailing dehydration and partial desiccation of the meat products.

Downstream of the humidifying station 7 there is a slide 4, a second feeder device 12 for the humidified products 3, analogous to said first feeder device, to bring the items 3 forward, one at a time, to the end of the slide 4 against a raised edge 13 of said slide, to prepare the item 3 to be held by means of a holding device 14, consisting, for example, of a plurality of pincers 15 made to oscillate on a longitudinal pin 16 by means of a double-acting pneumatic cylinder 17.

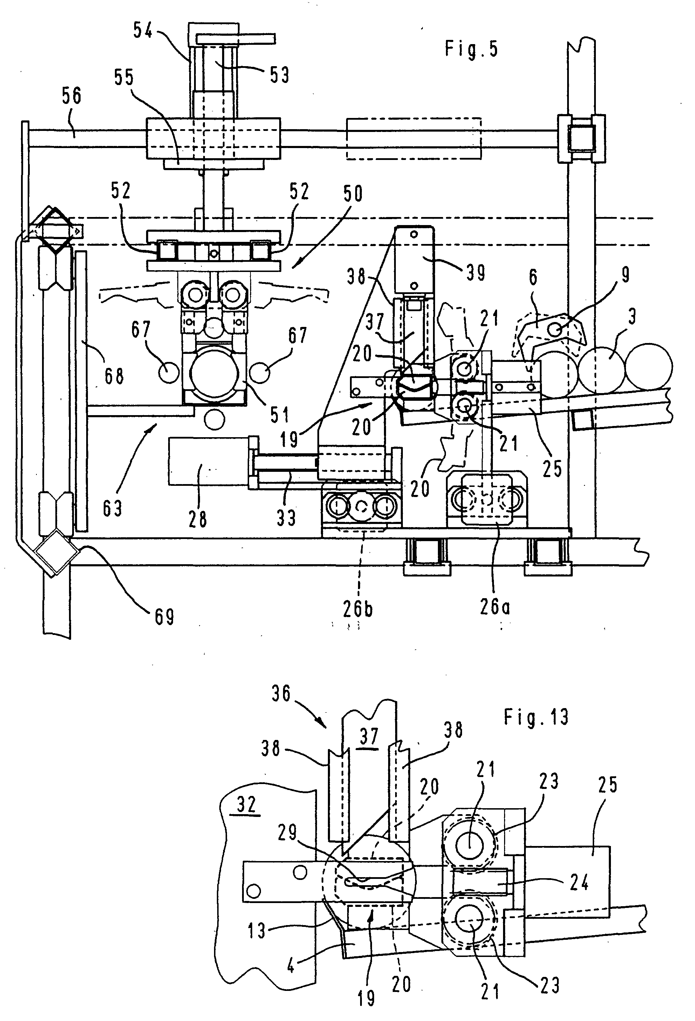

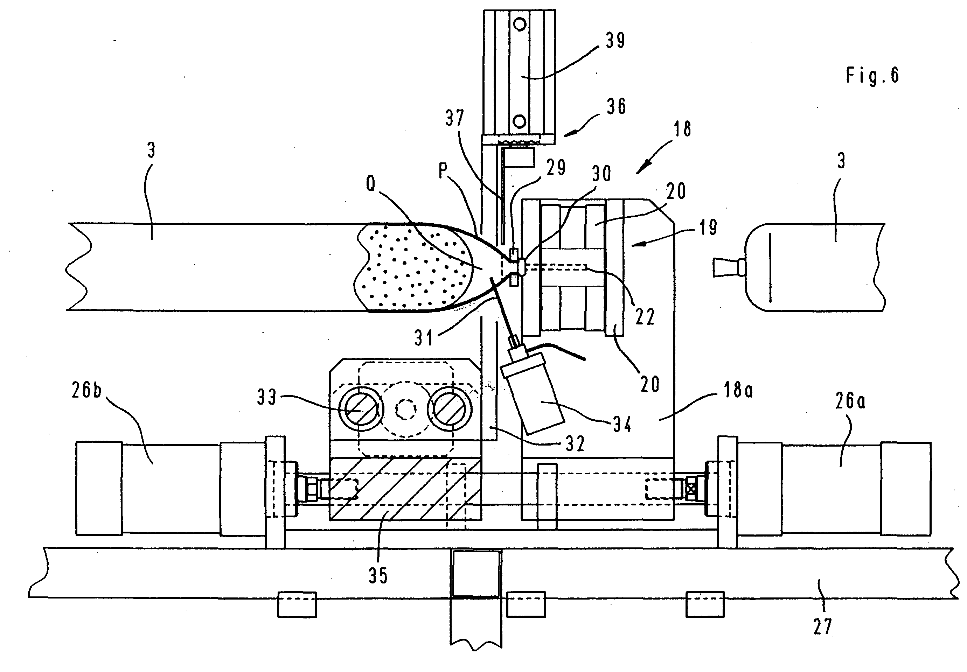

At one of the ends of the item 3 held by pincers 15, for example, at its more tapered end, the machine 1 has a tensioning device 18 for the preliminary separation of the skin P from the meat products consisting of a gripping pincer 19 with oscillating jaws 20 (Figure 5) provided with gripping ends with conjugate opposing surfaces, one being concave, the other convex, that are made to lock together, oscillating on respective pins 21, on end 22, being in the form of an indented cone diverging outwards, closing the skin P (Figure 6) containing the meat products of the items 3.

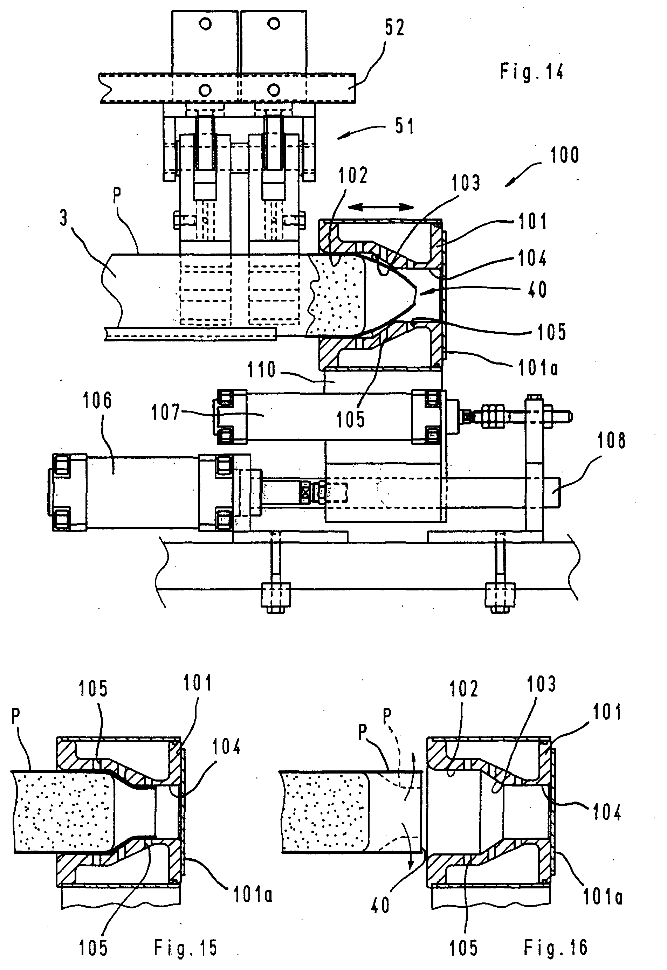

As shown in Figure 13, the jaws 20 each have, at the end where they are hinged on respective pins 21, a driving gearwheel 23; both the wheels 23 being driven by means of the toothed surfaces on opposite sides of a toothed bar driven with reciprocating motion between a closed position and an open position be means of a double-acting pneumatic cylinder 25.

The tensioning device 18 is supported on a first longitudinal sliding carriage 18a that is made to slide in a direction which is parallel to the axis of the item 3 by driving means, for example, consisting of a cylinder 26a, fixed to the structure 27 of the machine 1 to bring the gripping pincer 19 closer to the end 22 of the skin P of the item 3 so that said pincer may lock onto said end.

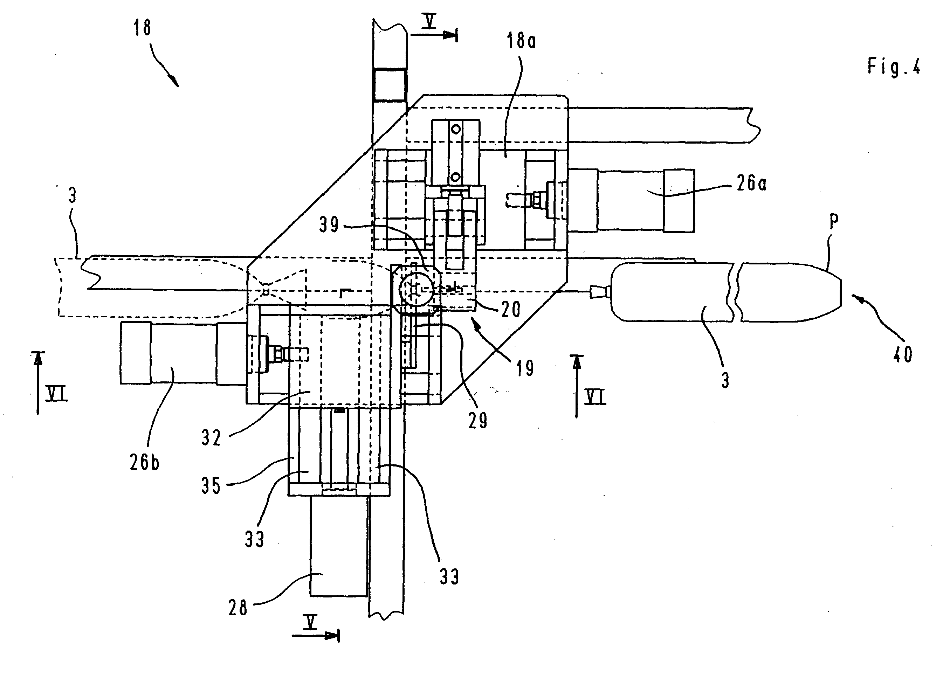

Between pincer 19 and the body of the item 3 in a position beneath the tensioning device 18 a forked distance piece 29 may be inserted, by driving means preferably consisting of a double-acting pneumatic cylinder 28 (Figure 4), which isolates outwards the fastener 30 closing the end 22; said distance piece being made integral with the gripping pincer 19 in its motion in a direction parallel to the axis of the item 3, and away from it.

As shown in Figure 6, the tensioning device 18 is made to co-operate with perforator with needle 31, supported on a transverse sliding carriage 32 driven by means of cylinder 28 on runners 33, made to move between an outer position of disengagement and an internal position of penetration by means of the respective driving means 34: the perforator 31 being suitable for injecting, in its position of penetration through the skin P of the item 3, a predetermined quantity of air under pressure into cavity Q defined between said skin P and the meat products to cause it to separate in the area around the respective end. The forked distance piece 29 is also supported on the transverse sliding carriage 32.

The transverse sliding carriage 32 is also supported on a second longitudinal sliding carriage 35 made to move in a direction which is parallel to the axis of the item 3 being processed by means of the pneumatic cylinder 26b.

The tensioning device 18 is also made to co-operate with a cropping device comprising a cutting unit 36 consisting of a blade 37 coupled sliding runners 38 made integral with said first longitudinal sliding carriage 18a in a plane which is perpendicular to the axis of the items 3 and driven by means of double-acting pneumatic cylinder 39: the function of the cutting unit is that of cutting the skin P of the item 3 being processed, so as to carry out the cropping, once the skin P has been separated from the meat products in the zone of the end 22 by means of the insufflation of air in the cavity Q.

When the item 3 is in a position corresponding to that of the tensioner 18, whilst being held by pincers 15, its end 22 is gripped by the pincer 19, 20 and the first longitudinal sliding carriage 18a is activated in order to exert a tensile stress on it away from the body of the item; transverse sliding carriage 32 is then activated to bring the distance piece 29 for the fastener 30 and the perforator with needle 31 into position; prior to the insufflation of the separating fluid in the cavity Q, the second longitudinal sliding carriage 35 is activated in order to move the fastener away from the body of the item; once the insufflation of the separating fluid has been carried out, the blade 37 is lowered to crop the item 3.

In this way, the item is cropped without waste and an open end of the skin is provided for the subsequent operations required for peeling.

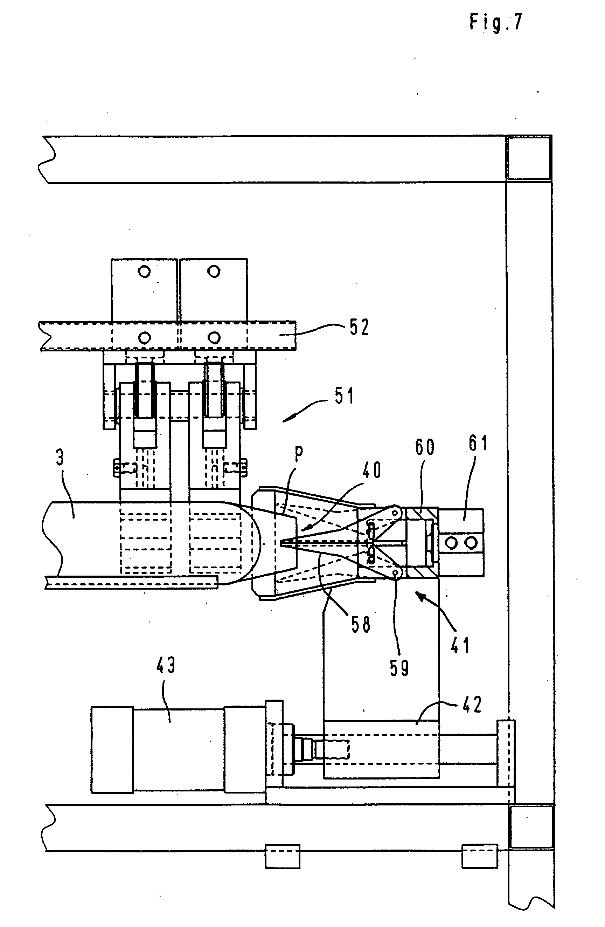

The removal of the end 22 and the fastener 30 determines an opening in the skin P of the item 3 which is subsequently to be enlarged, preferably in progressive stages, by means of a divaricating device 41 supported on a sliding carriage 42 (Figure 7), made to move longitudinally by driving means 43, positioned correspondingly with the axial extension of the item 3 on the side of the opening 40: the item being moved with its opening 40 up to the divaricating device 41 by means of conveying devices consisting, for example, an axial thruster 44 consisting of a thrust arm 45 supported so that it may slide axially on a trolley 46, guided bilaterally on a pair of guide ways 47 and made to translate by means of a motor reducer unit 48 coupled to a respective driving chain 49.

During the transfer from the between the cropping station in proximity to the cropping device 18 and the position facing the divaricating device 41, the item 3 rests on a pair of longitudinal parallel guides 49a.

In its position facing the divaricating device 41, the product 3 item is supported by positioning means consisting of a positioning device 50 comprising two pairs of pincers 51 driven pneumatically and supported on a cross-member 52 that may move in a vertical direction by means of vertical guides 53 and pneumatic cylinder 54; said vertical guides 53 and said cross-member 52 being supported on a sliding carriage being supported on a sliding carriage 55 that moves in a direction which is perpendicular to the axis of the items 3 on guides 56 by means of a respective cylinder 57.

The divaricating device 41 may comprise two pairs of divaricating elements 58 of the skin P, hinged so as to oscillate on pins 59 fixed to an external sleeve 60 between a neutral closed position corresponding with the axis of the item 3 and an open position in contact with the internal side of the edge of the opening 40 of the skin P to effect an suitable increase in its dimensions.

Each divaricator element 58, indicatively, is substantially in the shape of an acute angle triangle and may be activated by means of a driving device comprising a pneumatic cylinder 61.

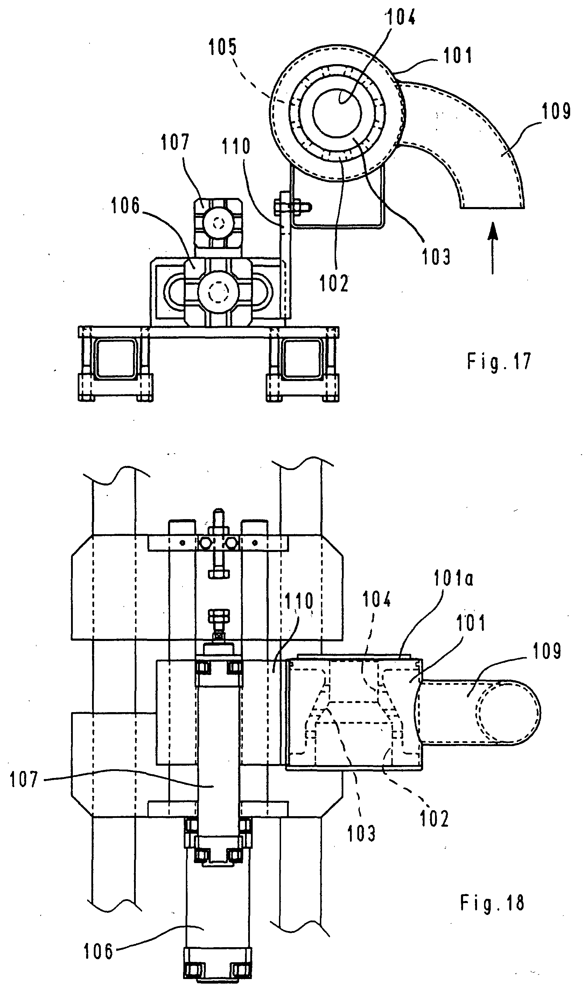

As shown in Figures 14 to 18, the divaricating device may be vacuum-operated and in such a version it is indicated overall as 100: it comprises a hollow body 101 having an internal surface provided with an inlet portion 102, corresponding substantially to the external diameter of the item 3, a converging portion 103 and an end portion 104 with an internal diameter which is smaller than that of the inlet portion 102.

The diameter of the end portion 104 of surface is preferably greater than the transverse dimension of the opening 40 of the skin P.

The portions 102, 103, 104 have intake holes 105 that communicate, by means of the hollow body 101 and a respective intake duct 109, with means for vacuum pumping to suck the skin P against the portions 102, 103, 104 of surface and in this way to divaricate its respective end and opening 40 in a permanent manner.

To achieve the divarication, the divaricator device 100 is first positioned against the corresponding end of the item 3 with opening 40 and, subsequently, once the skin P has adhered to the portions 102, 103, 104 of surface, said end is moved away in an axial direction, so as to guarantee that the dilated configuration achieved during intake is maintained.

For an improved divarication, it is preferable if the opening 102, 103, 104 is closed by an end plate 101a on the opposite side to that into which the end of the item 3 enters.

Driving means 106, 107 co-operating with guiding means 108 enable the movement, by means of support 110, of the divaricator device 100 away from and towards the opening 40, in a direction that is parallel to the longitudinal axis of the item 3.

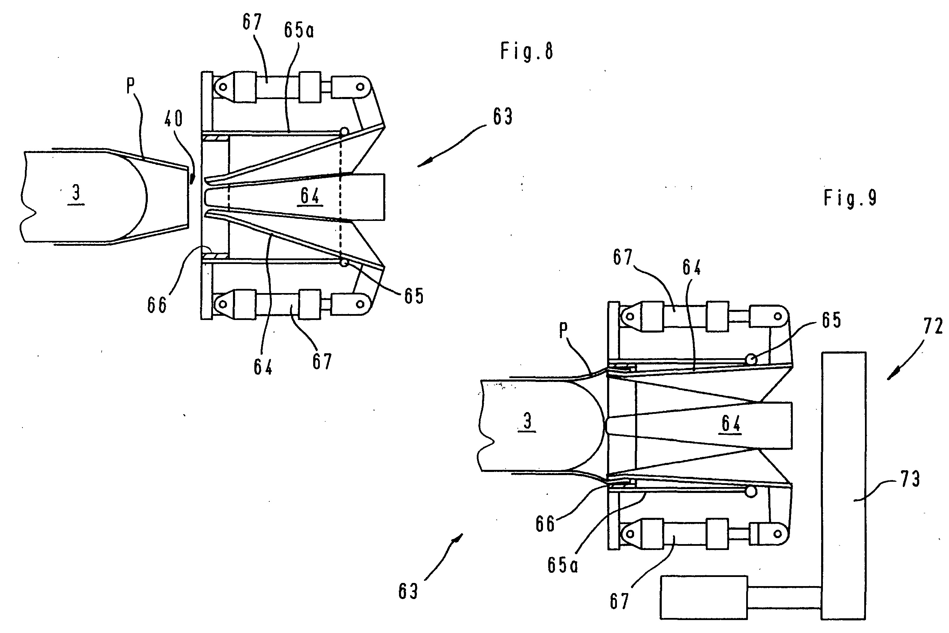

The item 3, with the opening 40 of the skin P suitably enlarged in a permanent manner is transferred by the positioning device 50 to the peeling station 62, comprising a peeling device with divaricating-peeling pincer 63 comprising a double pair of elements 64 (Figures 8, 9) for gripping the skin P from the inside, substantially corresponding to the divaricator elements 58, but hinged on pins 65 positioned on a diameter which is greater than that of the item 3, to block the skin against a reference ring 66 supported on a quadrangular frame 65a circumscribing said ring, on which the gripping elements 64 are hinged.

Each said gripping element is made to oscillate on its respective pin 65 by means of a corresponding pneumatic cylinder 67.

The divaricating-peeling pincer 63 is made to move in the direction as defined by the axis of the item 3 and in an external coaxial position with respect to it, by driving means means comprising a trolley 68 running in a guided manner on a pair of longitudinal runners 69 and coupled to a motor reducer unit 70 by means of belt 71.

It is to be noted that in opening the gripping elements 64 to block the skin P against the ring 66, the opening 40 of said skin is forced further apart until it reaches a size that enables it to be drawn off the body of the item 3.

As it moves along the axis of the item 3 towards the opposite end from the opening 40, the divaricating-peeling pincer 63 liberates the item 3 from the skin P and pulls it rearwards over the entire length of said item until it separates the intact end so as to enable the intervention of an expelling device 72 for the separated skin P, for example, advantageously consisting of an oscillating deflector arm, or an auxiliary pincer 73 to the side of peeling pincer 63: all this in order to enable the collection of the skins P separated from the meat products of the items 3 in an underlying container.

It is to be noted that during the movement of the divaricating-peeling pincer 63, pincers 51, fixed to the cross-member 52 in an adjustable manner, open and close in sequence so as to avoid interfering with said pincer.

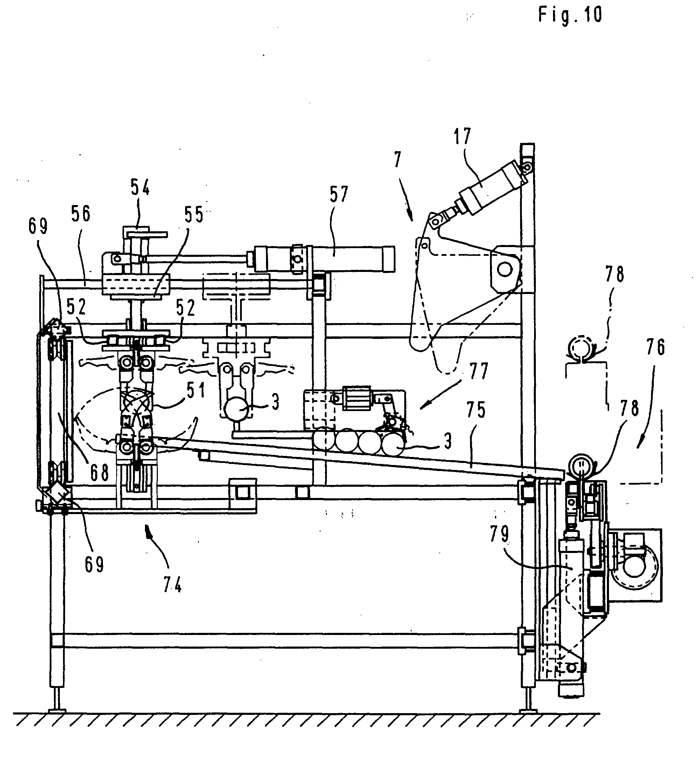

At the opposite end of the item 3 from that with the opening 40, shears 74 (Figure 10) are provided for cutting the items being processed into uniform lengths.

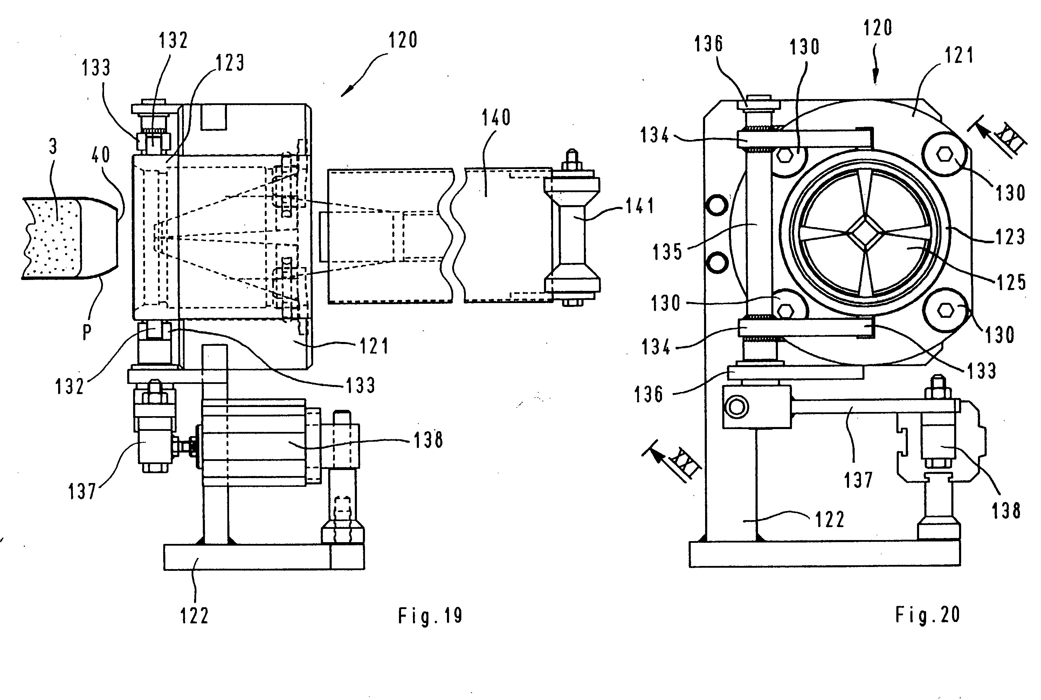

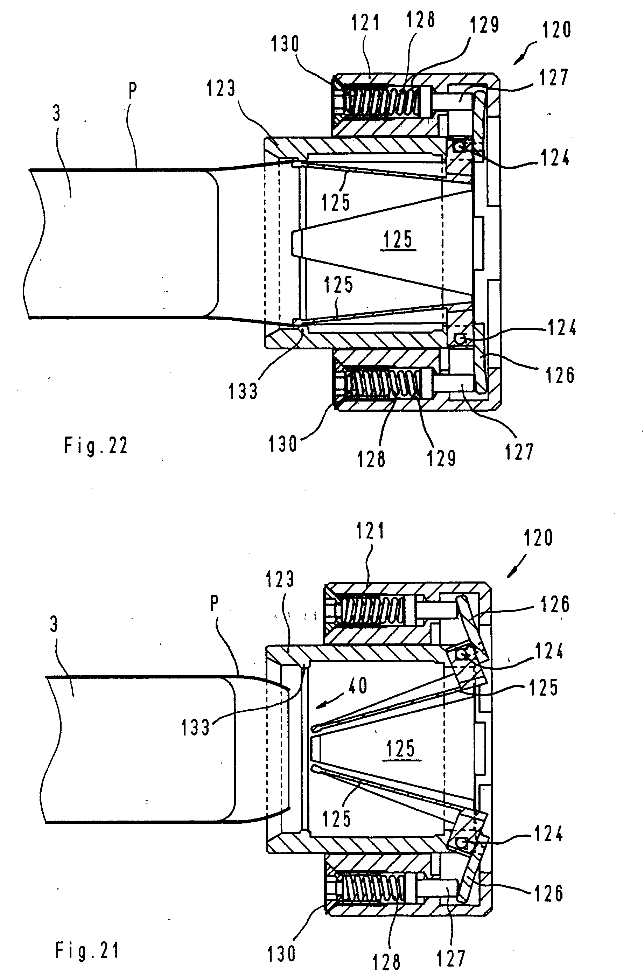

Figure 19 to 21 show a divaricating-peeling pincer 120 according to a further version comprising an external sleeve 121 coupled to a support 122 fixed to the trolley 68 and translating with it, the external sleeve supporting an internal sleeve that may move axially and to which are hinged, by means of pins 124, the internal ends of a plurality of divaricator elements 125 which are integral with corresponding reaction appendages 126 counteracted by points 127, each of which is loaded by a spring 128 inserted in an axial hole 129 in the external sleeve 121 closed by a screw 130.

The divaricator elements 125 block the skin P along its edge defining the opening 40 against an internal projection of the external sleeve 123.

The internal sleeve 123 has a front part, protruding from the external sleeve 121 and facing the opening 40, that has a pair of radial projections 132 on the outside co-operating with the forked ends 133 of a pair of levers 134 fixed to a shaft 135 oscillating on bushes 136 by means of connecting rod 137 and respective driving cylinder 138 coupled to support 122.

In this way, once the divaricator elements 125, in the insertion configuration, are positioned inside the opening 40, the cylinder 138 is activated and, by means of the rotation of shaft 135 with forks 133, the internal sleeve 123 is made to advance: this causes the rotation of the divaricator elements 125 around pins 124 and the locking of the respective free ends against the annular projection 133. Furthermore, the springs are pre-loaded by the points 127 to enable the return stroke and the release of the skin P when the action of the forks 133 ceases.

This version of divaricating-peeling pincer permits a single cylinder 138 to be used for driving all the divaricator elements 125.

A shelf 140 is made integral with the support 122 on which lies the covering P after having been drawn off the item 3: the free end of said shelf is provided with a roller 141, which is idle.

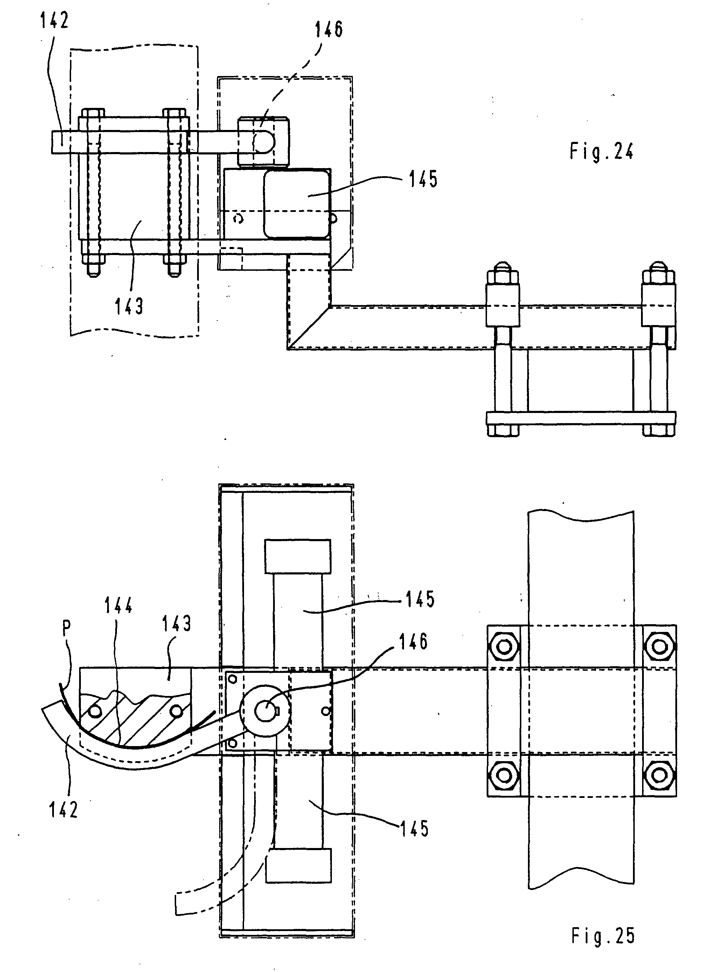

Instead of the expelling device 72, a pincer 142 can be fixed to the frame of the machine in a position corresponding with the final stretch of the peeling stroke for extracting the covering P from the divaricating-peeling pincer, comprising an arched jaw 142 that may be locked against a reference block 143 that has a seat 144 (Figure 25) conjugate with it, for example, having a correspondingly arched groove.

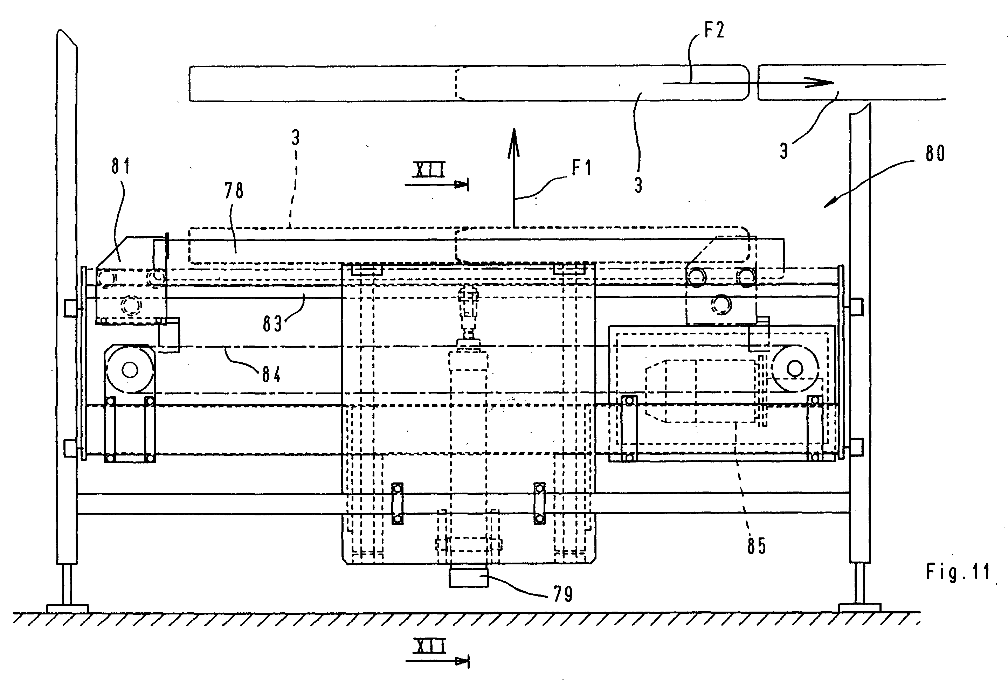

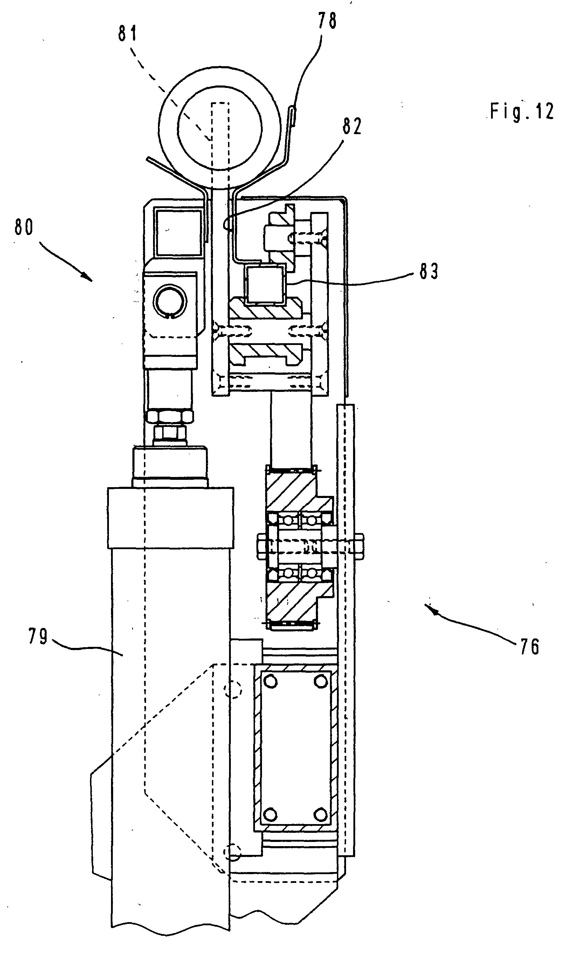

Driving means 145 and oscillating shaft 146 are provided to rotate the arched lever through an angle of approximately 90°, so as to enable the jaw 142 to be locked when the covering P is in a position facing the reference block 143. As shown in Figures 10 to 13, the peeled items are deposited on a slide 75 inclined downwards and outwards with respect to the machine, with the opening of the pincers 51 and a transferred under the action of gravity to a lifting device 76 with the interposition of a third feeder device 77 analogous to the feeder devices 5, 12 described earlier.

The lifting device 76 has a cradle 78 supported on means for lifting comprising a pneumatic cylinder 79.

An expulsion unit 80 is associated with the cradle 78, comprising a thruster 81 sliding in a longitudinal slit 82 in the cradle 78 driven so that it runs on a guide 83 by means of belt 84 coupled to a motor reducer unit 85.

The peeled items are first lifted by cylinder 79 as shown by the arrow F1 and subsequently moved axially in the direction shown by the arrow F2 with the intervention of the thruster 81.

In practice the materials, dimensions and details of execution may be different from, but technically equivalent to those described without departing from the juridical domain of the present invention.

Although entailing larger overall dimensions, the machine can, for example, be arranged in line, instead of with a pathway for the items 3 arranged in parallel stretches.

## Claims

1. A method for peeling a food product (3) enclosed in a casing (P), particularly salamis, comprising:
- cropping one end of said casing (P) to obtain an opening (40) thereof;
- peripherally divaricating said opening (40) so as to allow removal of said casing (P);
- drawing said casing (P) coaxially of said product towards an opposite end of said product (3),
**characterized by**, before said cropping, forming a cavity (Q) between content of said product (3) and said casing (P) and injecting a separating fluid into said cavity (Q).

2. A method according to claim 1, wherein, before said forming, said product (3) and its casing (P) are humidified over substantially the whole surface of said casing (P).

3. A method according to claim 1, or 2, wherein said divaricating comprises a first phase in which said opening (40) is enlarged to an increased transverse dimension with respect to its initial dimension, but still smaller than the transverse dimension of the product (3), and a second phase in which said opening (40) is widened up to a dimension (66) greater than the transverse dimension of saíd product (3).

4. A machine for peeling a food product (3) enclosed in a casing (P), particularly salamis, comprising:
- cropping means (36, 37, 38) for cutting one end of said casing (P) and obtain an opening (40) thereof;
- divaricating means (41; 100) for widening peripherally said opening (22) so as to allow removal of said casing (P);
- peeling means (63; 120) for drawing off said casing (P) and (3) acting on said opening (40) in an axial direction of said product (3),
**characterized in that**, forming means are provided for forming a cavity (Q) between content of said product (3) and said enclosure (P) and injecting means are provided for injecting a separating fluid into said cavity (Q).

5. A machine according to claim 4, wherein said cropping means, comprising a blade (37) coupled with respective guide ways (38) and associated with respective driving means (39), is situated on a first longitudinal sliding carriage (18a) that moves in a direction which is parallel to the axis of the product (3) by means of respective driving means (26a).

6. A machine according to claim 4, or 5, wherein said forming means is positioned on said first longitudinal sliding carriage (18a) and comprises tensioning means (18).

7. A machine according to any one of claims 4 to 6, wherein said tensioning means (18) comprises a gripping pincer (19) with oscillating jaws (20) suitable for gripping one end (22) of the casing (P), while the body of the product (3) is held by holding means (14, 15, 16, 17).

8. A machine according to any one of claims 4 to 7, wherein a second longitudinal sliding carriage (35) is provided and equipped with needle perforating means (31) of said injecting means.

9. A machine according to claim 8, wherein said perforating means is supported on a transverse sliding carriage (32) movable in a direction which is substantially perpendicular to the product (3).

10. A machine according to claim 8, or 9, wherein said second longitudinal sliding carriage (35) is movable in a direction which is substantially parallel to the direction in which said first longitudinal sliding carriage (18a) moves.

11. A machine according to claim 9 or 10, wherein said transverse sliding carriage (32) is equipped with a forked distance piece (29) to isolate a fastener (30) closing the end (22) of the casing (P) from a cutting trajectory of the blade (37).

12. A machine according to any one of claims 4 to 11, wherein said divaricating means (41) and said peeling means (63;120) comprise two pairs of divaricating elements (58; 64; 124).

13. A machne according to claim 12, wherein said divaricating elements (58; 64; 124) are offset 90° with respect to each other and oscillate between a closed position, suitable for insertion into said opening (40) and an open position, corresponding to a radial deformation of said opening (40).

14. A machine according to claim 12, or 13, wherein said divaricating elements (58; 64; 124) are substantially triangular in shape and are hinged to a sleeve (60, 65a; 66; 123).

15. A machine according to claim 14, wherein said sleeve (60, 65a; 66; 123) has oscillating driving means for driving in oscillation (61; 67; 138) said divaricating elements (58; 64; 124).

16. A machine according to claim 14, or 15, wherein a lever (133, 135) with forked end (133) is interposed between said sleeve (123) and said driving means (138), said forked end engaging with radial projections (132) of said sleeve (123), the sleeve being countered by elastic means (128).

17. A machine according to any one of claims 14 to 16, wherein said sleeve (66, 123) has a greater diameter than that of the product (3) and acts as a reference element for said peeling means (63) for blocking the casing (P) against it with the maximum divarication effected by the divaricating elements (64; 124).

18. A machine according to any one of claims 4 to 17, wherein said divaricating means (100) comprises a hollow body (101), with an internal opening (102, 103, 104) acting as a seat for an end of product (3), said hollow body being provided with holes (105) to suck on the casing (P) divaricating it against the internal surface of said opening (40).

19. A machine according to any one of claims 4 to 18, and further comprising transferring means for transferring the cropped product (3) from a position in which it is held by holding means (14, 15, 16, 17) to a position facing said divaricating means (41; 100), said transferring means comprising an axial thruster (44) and a thruster arm (45) supported bilaterally to run on a pair of guides (47) and coupled to respective driving means.

20. A machine according to any one of claims 4 to 19, wherein in its position facing said divaricating means (41; 100), the product (3) is supported by positioning means consisting of a positioning means (40) comprising two pairs of pincers (51), said pair of pincers (51) being pneumatically driven and supported on a cross-member (52) wherein in its position facing said divaricating means (41; 100), the product (3) is supported by positioning means consisting of a positioning means (40) comprising two pairs of pincers (51), said pair of pincers (51) being pneumatically driven and supported on a cross-member (52) which is movable in a vertical direction along vertical guides (53); said vertical guides (53) and said cross-member (52) being supported on a sliding carriage that is movable on guides (56) in a direction which is perpendicular to the axis of said product (3).

21. A machine according to any one of claims 4 to 20, wherein said peeling means (63; 120) is movable in a direction defined by the longitudinal axis of said product (3) and in a external, coaxial position with respect to said product (3), by driving means comprising a trolley (68) that runs in a guided manner on a pair of longitudinal runners (69) and coupled to a motor reducer unit (70) by means of a belt (71).

22. A machine according to any one of claims 4 to 21, and further comprising expelling means (72; 142, 143) for expelling the casing (P) selected from a group comprising: oscillating deflector arm, auxiliary pincer (73; 142, 143) situated beside the peeling pincer (63).

23. A machine according to claim 22, wherein said auxiliary pincer comprises an arched jaw (142) enagaged in a correspondingly arched seat (144) of a reference block (143).

24. A machine according to any one of claims 4 to 23, and further comprising at least one inclined slide (4; 75) cooperating with at least one feeder device (5) with rocker arm (6; 77) for transferring said products (3) individually towards a lower edge of said slide (4; 75).

25. A machine according to any one of claims 4 to 24, wherein upstream of said cropping means (36, 37, 38) a humidifying station (7) is provided equipped with a plurality of rollers (8) frictionally acting on the surface of said product (3) for rotating said product (3) around its respective longitudinal axis.

26. A machine according to any one of claims 4 to 25, wherein in proximity of said peeling means (63; 120) lifting means (76) is provided having a cradle (78) for supporting said product (3) and an expelling unit (80) is provided for expelling said product (3).

27. A machine according to claim 26, wherein said expelling unit (80) is associated with the cradle (78) and comprising a thruster (81) running in a longitudinal slit (82) of the cradle (78) and driven along a guide (83).

## Patentansprüche

1. Verfahren zum Pellen eines von einer Pelle (P) umgebenen Lebensmittelerzeugnisses (3), insbesondere einer Salami, mit den Verfahrensschritten:
- Abkappen eines Endes der Pelle (P ), um eine Öffnung (40) derselben zu erhalten;
- umfängliches Spreizen der Öffnung (40), um die Pelle (P) entfernen zu können;
- koaxiales Abziehen der Pelle (P) von dem Erzeugnis zu einem gegenüberliegenden Ende des Erzeugnisses (3) hin,
**dadurch gekennzeichnet, daß** vor dem Abkappen ein Hohlraum (Q) zwischen dem Volumen des Erzeugnisses (3) und der Pelle (P) gebildet und ein Trennfluid in den Hohlraum (Q) injiziert wird.

2. Verfahren nach Anspruch 1, wobei vor dem Bilden das Erzeugnis (3) und seine Pelle (P) über im wesentlichen die gesamte Oberfläche der Pelle (P) befeuchtet werden.

3. Verfahren nach Anspruch 1 oder 2, wobei das Spreizen eine erste Phase , in der die Öffnung (40) zu einer bezüglich ihrer anfänglichen Abmessung vergrößerten Querabmessung erweitert wird, die jedoch kleiner ist als die Querabmessung des Erzeugnisses (3) und eine zweite Phase umfaßt, in der die Öffnung (40) auf eine Abmessung (66) aufgeweitet wird, die größer ist als die Querabmessung des Erzeugnisses (3).

4. Maschine zum Pellen eines von einer Pelle (P) umgebenen Lebensmittelerzeugnisses (3), insbesondere einer Salami, mit:
- Abkappmitteln (36, 37, 38) zum Abschneiden eines Endes der Pelle (P), um eine Öffnung (40) derselben zu erhalten;
- Spreizmitteln (41; 100) zum umfänglichen Weiten der Öffnung (22), um die Pelle (P) entfernen zu können;
- Pellmitteln (63; 120) zum Abziehen der Pelle (P) und (3), die auf die Öffnung (40) in einer axialen Richtung des Erzeugnisses (3) wirken,
**dadurch gekennzeichnet, daß** Bildungsmittel zum Bilden eines Hohlraumes (Q) zwischen dem Volumen des Erzeugnisses (3) und der Einhüllung (P) vorgesehen sind, und daß Injiziermittel zum Injizieren eines Trennfluids in den Hohlraum (Q) vorgesehen sind.

5. Maschine nach Anspruch 4, wobei die Abkappmittel, die eine mit jeweiligen Führungsbahnen (38) gekoppelte und mit jeweiligen Antriebsmitteln (39) verbundene Schneide (37) aufweisen, sich auf einem ersten längsverlaufenden Gleitschlitten (18a) befinden, der sich mittels jeweiliger Antriebsmittel (26a) in einer Richtung bewegt, die parallel zur Achse des Erzeugnisses (3) verläuft.

6. Maschine nach Anspruch 4 oder 5, wobei die Bildungsmittel auf einem ersten längsverlaufenden Gleitschlitten (18a) angeordnet sind und Spannmittel (18) aufweisen.

7. Maschine nach einem der Ansprüche 4 bis 6, wobei die Spannmittel (18) eine Greifzange (19) mit oszillierenden Klemmbaken (20) aufweisen, die zum Greifen eines Endes (22) der Pelle (P) geeignet sind, während der Körper des Erzeugnisses (3) durch Haltemittel (14, 15, 16, 17) gehalten wird.

8. Maschine nach einem der Ansprüche 4 bis 7, wobei ein zweiter längsverlaufender Gleitschlitten (35) vorgesehen ist und mit Nadel-Perforationsmitteln (31) der Injiziermittel ausgestattet ist.

9. Maschine nach Anspruch 8, wobei die Perforationsmittel auf einem querverlaufenden Gleitschlitten (32) getragen sind, der in einer Richtung beweglich ist, die im wesentlichen senkrecht zu dem Erzeugnis (3) verläuft.

10. Maschine nach Anspruch 8 oder 9, wobei der zweite längsverlaufende Gleitschlitten (35) in einer Richtung beweglich ist, die im wesentlichen parallel zu der Richtung ist, in der sich der erste längsverlaufende Gleitschlitten (18a) bewegt.

11. Maschine nach Anspruch 9 oder 10, wobei der querverlaufende Gleitschlitten (32) mit einem gegabelten Abstandsstück (29) ausgestattet ist, um einen Schließer (30), der das Ende (22) der Pelle (P) verschließt, von einer Schneidbahnkurve der Klinge (37) zu isolieren.

12. Maschine nach einem der Ansprüche 4 bis 11, wobei die Spreizmittel (41) und die Pellmittel (63; 120) zwei Paar Spreizelemente (58; 64; 124) aufweisen.

13. Maschine nach Anspruch 12, wobei die Spreizelemente (58; 64; 124) um 90° relativ zueinander versetzt sind und zwischen einer geschlossenen Position, die zum Einsetzen in die Öffnung (40) geeignet ist, und einer offenen Position oszillieren, die einer radialen Verformung der Öffnung (40) entspricht.

14. Maschine nach Anspruch 12 oder 13, wobei die Spreizelemente (58; 64; 124) im wesentlichen von dreieckiger Form sind und an eine Hülse (60, 65a; 66; 123) angelenkt sind.

15. Maschine nach Anspruch 14, wobei die Hülse (60, 65a; 66; 123) oszillierende Antriebsmittel zum Antreiben der Spreizelemente (58; 64; 124) in Oszillation aufweist.

16. Maschine nach Anspruch 14 oder 15, wobei ein Hebel (133, 135) mit einem gegabelten Ende (133) zwischen der Hülse (123) und den Antriebsmitteln (138) angeordnet ist, wobei das gegabelte Ende mit radialen Vorsprüngen (132) der Hülse (123) in Eingriff steht, wobei der Hülse elastische Mittel (128) entgegenwirken.

17. Maschine nach einem der Ansprüche 14 bis 16, wobei die Hülse (66, 123) einen größeren Durchmesser als denjenigen des Erzeugnisses (3) aufweist und als Bezugselement für die Pellmittel (63) zum Festlegen der Pelle (P) daran mit der maximalen durch die Spreizelemente (64; 124) bewirkten Spreizung wirkt.

18. Maschine nach einem der Ansprüche 4 bis 17, wobei die Spreizmittel (100) einen Hohlkörper (101) aufweisen, wobei eine innere Öffnung (102, 103, 104) desselben als Sitz für ein Ende des Erzeugnisses (3) wirkt, wobei der Hohlkörper mit Löchern (105) versehen ist, um die Pelle (P) anzusaugen und gegen die innere Oberfläche der Öffnung (40) zu spreizen.

19. Maschine nach einem der Ansprüche 4 bis 18, die weiterhin Umsetzmittel zum Umsetzen des abgekappten Erzeugnisses (3) von einer Position, in der es durch Haltemittel (14, 15, 16, 17) gehalten ist, in eine den Spreizmitteln (41; 100) gegenüberliegende Position, wobei die Umsetzmittel eine axiale Schubeinrichtung (44) und einen Schubarm (45) aufweisen, die zweiseitig getragen sind, um auf einem Paar Führungen (47) zu laufen, und die an jeweilige Antriebsmittel gekoppelt sind.

20. Maschine nach einem der Ansprüche 4 bis 19, wobei das Erzeugnis in seiner den Spreizmitteln (41; 100) gegenüberliegenden Position durch Positioniermittel getragen ist, die aus Positioniermitteln (40) mit zwei Zangen (51) bestehen, wobei die Zangen (51) pneumatisch angetrieben und an einem Querträger (52) getragen sind, der in einer vertikalen Richtung entlang vertikaler Führungen (53) beweglich ist, wobei die vertikalen Führungen (53) und der Querträger (52) auf einem Gleitschlitten getragen sind, der auf Führungen (56) in einer Richtung beweglich ist, die senkrecht zur Achse des Erzeugnisses (3) verläuft.

21. Maschine nach einem der Ansprüche 4 bis 20, wobei die Pellmittel (63; 120) in einer durch die Längsachse des Erzeugnisses (3) definierten Richtung und in einer äußeren, koaxialen Position bezüglich des Erzeugnisses (3) durch Antriebsmittel beweglich sind, die einen Laufwagen (68) aufweisen, der in geführter Weise auf einem Paar längsverlaufender Läufer (69) läuft und an eine Motor-Reduzier-Einheit (70) mittels eines Riemens (71) gekoppelt ist.

22. Maschine nach einem der Ansprüche 4 bis 21, die weiterhin Auswerfmittel (72; 142; 143) zum Auswerfen der Pelle (P) aufweist, die aus einer Gruppe ausgewählt sind, die aufweist: einen oszillierenden Abweiserarm, eine Hilfszange (73; 142; 143), die sich neben der Pellzange (63) befinden.

23. Maschine nach Anspruch 22, wobei die Hilfszange eine gekrümmte Klemmbacke (142) aufweist, das in einen entsprechend gekrümmten Sitz (144) eines Bezugsblocks (143) eingreift.

24. Maschine nach einem der Ansprüche 4 bis 23, die weiterhin zumindest eine geneigte Rutsche (4; 75) aufweist, die mit zumindest einer Zuführvorrichtung (5) mit einem Wippenarm (6; 77) zusammenwirkt, um die Erzeugnisse (3) einzeln zu einer unteren Kante der Rutsche (4; 75) umzusetzen.

25. Maschine nach einem der Ansprüche 4 bis 24, wobei stromaufwärts der Abkappmittel (36, 37, 38) eine Befeuchtungsstation (7) vorgesehen ist, die mit einer Mehrzahl von Rollen (8) ausgerüstet ist, die reibschlüssig auf die Oberfläche des Erzeugnisses (3) einwirken, um das Erzeugnis (3) um seine jeweilige Längsachse zu drehen.

26. Maschine nach einem der Ansprüche 4 bis 25, wobei in Nähe der Pellmittel (63; 120) Hebemittel (76) vorgesehen sind, die eine Wiege (78) zum Tragen des Erzeugnisses (3) aufweisen, und wobei eine Auswerfeinheit (80) zum Auswerfen des Erzeugnisses (3) vorgesehen ist.

27. Maschine nach Anspruch 26, wobei die Auswerfeinheit (80) mit der Wiege (78) verbunden ist und eine Schubeinrichtung (81) aufweist, die in einem längsverlaufenden Schlitz (82) der Wiege (78) verläuft und entlang einer Führung (83) angetrieben ist.

## Revendications

1. Procédé pour peler un produit alimentaire (3) entouré d'un boyau (P), en particulier du salami, comprenant les étapes de :
- tranchage d'une extrémité dudit boyau (P) pour obtenir une ouverture (40) de celui-ci ;
- élargissement périphérique de ladite ouverture (40) afin de permettre le retrait dudit boyau (P);
- arrachage dudit boyau P de manière coaxiale audit produit en direction d'une extrémité opposée dudit produit (3),
***caractérisé par*** la formation, avant ledit tranchage, d'une cavité (Q) entre le volume dudit produit (3) et ledit boyau (P) et l'injection d'un fluide séparateur dans ladite cavité (Q).

2. Procédé selon la Revendication 1, dans lequel, avant ladite formation, ledit produit (3) et son boyau (P) sont humidifiés sur sensiblement toute la surface dudit boyau (P).

3. Procédé selon la Revendication 1 ou 2, dans lequel ledit élargissement comprend une première phase dans laquelle ladite ouverture (40) est élargie jusqu'à une dimension transversale accrue par rapport à sa dimension initiale, mais encore inférieure à la dimension transversale du produit (3), et une seconde phase dans laquelle ladite ouverture (40) est agrandie jusqu'à une dimension (66) supérieure à la dimension transversale dudit produit (3).

4. Machine à peler un produit alimentaire (3) entouré d'un boyau (P), en particulier des salami, comprenant :
- des moyens de tranchage (36, 37, 38) pour couper une extrémité dudit boyau (P) et obtenir une ouverture (40) de celui-ci ;
- des moyens d'élargissement (41 ; 100) pour agrandir en largeur de manière périphérique ladite ouverture (22) afin de permettre le retrait dudit boyau (P) ;
- des moyens de dépouillage (63 ; 120) pour retirer ledit boyau (P) et (3) agir sur ladite ouverture (40) dans une direction axiale dudit produit (3),
***caractérisée en ce que*** des moyens de formage sont prévus pour former une cavité (Q) entre le volume dudit produit (3) et ledit boyau (P) et des moyens d'injection sont prévus pour injecter un fluide séparateur dans ladite cavité (Q).

5. Machine selon la Revendication 4, dans laquelle lesdits moyens de tranchage, comprenant une lame (37) couplée à des éléments de guidage respectifs (38) et associée à des moyens d'entraînement (39) respectifs, sont situés sur un premier chariot coulissant longitudinal (18a) qui se déplace dans une direction qui est parallèle à l'axe du produit (3) grâce à des moyens d'entraînement (26a) respectifs.

6. Machine selon la Revendication 4 ou 5 dans laquelle lesdits moyens de formage sont positionnés sur ledit premier chariot coulissant longitudinal (18a) et comprennent des moyens de tension (18).

7. Machine selon l'une quelconque des Revendications 4 à 6, dans laquelle lesdits moyens de tension (18) comprennent une pince de serrage (19) avec des mâchoires oscillantes (20) aptes à pincer une extrémité (22) du boyau (P) pendant que le corps du produit (3) est maintenu par des moyens de fixation (14, 15, 16, 17).

8. Machine selon l'une quelconque des Revendications 4 à 7, dans laquelle un second chariot coulissant longitudinal (35) est prévu et équipé avec des moyens de perforation (31) à aiguille desdits moyens d'injection.

9. Machine selon la Revendication 8, dans laquelle lesdits moyens de perforation sont reçus sur un chariot coulissant transversal (32) mobile dans une direction qui est sensiblement perpendiculaire au produit (3).

10. Machine selon la Revendication 8 ou 9, dans laquelle ledit second chariot coulissant longitudinal (35) est mobile dans une direction qui est sensiblement parallèle à la direction dans laquelle se déplace ledit premier chariot coulissant longitudinal (18a).

11. Machine selon la Revendication 9 ou 10, dans laquelle ledit second chariot coulissant transversal (32) est équipé d'une pièce d'écartement en fourche (29) destinée à isoler une agrafe (30) fermant l'extrémité (22) du boyau (P), d'une trajectoire de coupe de la lame (37).

12. Machine selon l'une quelconque des Revendications 4 à 11, dans laquelle lesdits moyens d'élargissement (41) et lesdits moyens de dépouillage (63 ; 120) comprennent deux paires d'éléments d'élargissement (58 ; 64 ; 124).

13. Machine selon la Revendication 12, dans laquelle lesdits moyens d'élargissement (58 ; 64 ; 124) sont décalés de 90° l'un par rapport à l'autre et oscillent entre une position fermée, adaptée pour une insertion dans ladite ouverture (40), et une position ouverte correspondant à une déformation radiale de ladite ouverture (40).

14. Machine selon la Revendication 12 ou 13, dans laquelle lesdits éléments d'élargissement (58 ; 64 ; 124) sont de forme sensiblement triangulaires et sont articulés sur un manchon (60 ; 65a ; 66 ; 123).

15. Machine selon la Revendication 14, dans laquelle ledit manchon (60 ; 65a ; 66 ; 123) possède des moyens d'entraînement oscillants pour entraîner en oscillation (61 ; 67 ; 138) lesdits éléments d'élargissement (58 ; 64 ; 124).

16. Machine selon la Revendication 14 ou 15, dans laquelle un levier (133, 135) avec une extrémité en fourche (133) est interposé entre ledit manchon (123) et lesdits moyens d'entraînement (138), ladite extrémité en fourche s'engageant avec des saillies radiales (132) dudit manchon (123), le manchon étant contré par des moyens élastiques (128).

17. Machine selon l'une quelconque des Revendications 14 à 16, dans laquelle ledit manchon (66, 123) possède un diamètre supérieur à celui du produit (3) et sert d'élément de référence auxdits moyens de dépouillage (63) pour bloquer le boyau (P) contre lui avec l'élargissement maximum effectué par les éléments d'élargissement (64 ; 124).

18. Machine selon l'une quelconque des Revendications 4 à 17, dans laquelle lesdits moyens d'élargissement (100) comprennent un corps creux (101) avec une ouverture interne (102, 103, 104) servant de siège à une extrémité du produit (3), ledit corps creux étant muni de trous (105) pour aspirer le boyau (P) contre la surface interne de ladite ouverture (40) en l'élargissant.

19. Machine selon l'une quelconque des Revendications 4 à 18, et comprenant de plus des moyens de transfert pour transférer le produit tranché (3) d'une position dans laquelle il est maintenu par les moyens de fixation (14, 15, 16, 17) à une position faisant face auxdits moyens d'élargissement (41 ; 100), lesdits moyens de transfert comprenant un poussoir axial (44) et un bras poussoir (45) supporté bilatéralement pour courir sur une paire de glissières de guidage (47) et couplé à des moyens d'entraînement respectifs.

20. Machine selon l'une quelconque des Revendications 4 à 19, dans laquelle, dans sa position faisant face auxdits moyens d'élargissement (41 ; 100), le produit (3) est supporté par des moyens de positionnement constitués d'un moyen de positionnement (40) comprenant deux paires de pinces (51), lesdites paires de pinces (51) étant entraînées pneumatiquement et supportées sur une traverse (52) qui est mobile dans une direction verticale le long de glissières de guidage verticales (53) ; lesdites glissières de guidage verticales (53) et ladite traverse (52) étant supportées sur un chariot coulissant qui est mobile sur des glissières de guidages (56) dans une direction qui est perpendiculaire à l'axe dudit produit (3).

21. Machine selon l'une quelconque des Revendications 4 à 20, dans laquelle lesdits moyens de dépouillage (63 ; 120) sont mobiles dans une direction définie par l'axe longitudinal dudit produit (3) et dans une direction externe coaxiale par rapport audit produit (3), grâce à des moyens d'entraînement comprenant un chariot (68) qui circule en étant guidé sur une paire de patins longitudinaux (69) et couplé à une unité réductrice (70) à moteur au moyen d'une courroie (71).

22. Machine selon l'une quelconque des Revendications 4 à 21, et comprenant de plus des moyens d'expulsion (72 ; 142, 143) pour expulser le boyau (P), choisis dans un groupement comprenant : bras déflecteur oscillant, pince auxiliaire (73 ; 142, 143), situés à côté de la pince de dépouillage (63).

23. Machine selon la Revendication 22, dans laquelle ladite pince auxiliaire comprend une mâchoire arquée (142) engagée dans un siège arqué de manière correspondante (144) d'un bloc de référence (143).

24. Machine selon l'une quelconque des Revendications 4 à 23, et comprenant de plus au moins une goulotte inclinée (4 ; 75) coopérant avec au moins un dispositif d'alimentation (5) avec culbuteur (6 ; 77) pour transférer individuellement lesdits produits (3) vers un bord inférieur de ladite goulotte (4 ; 75).

25. Machine selon l'une quelconque des Revendications 4 à 24, dans laquelle en amont desdits moyens de tranchage (36, 37, 38), un poste d'humidification (7) est prévu, équipé d'une pluralité de galets (8) agissant de manière frictionnelle sur la surface dudit produit (3) pour faire tourner ledit produit 3 autour de son axe longitudinal respectif.

26. Machine selon l'une quelconque des Revendications 4 à 25, dans laquelle, à proximité desdits moyens de dépouillage (63 ; 120), des moyens de levage (76) sont prévus possédant un berceau (78) pour le support du produit (3) et une unité d'expulsion (80) est prévue pour expulser ledit produit (3).

27. Machine selon la Revendication 26, dans laquelle ladite unité d'expulsion (80) est associée au berceau (78) et comprend un poussoir (81) courant dans une fente longitudinale (82) du berceau (78) et entraîné le long d'une glissière de guidage (83).
